Europäisches Patentamt

European Patent Office

Office européen des brevets

(11) Veröffentlichungsnummer: **0 166 245**
A2

## (12) EUROPÄISCHE PATENTANMELDUNG

(21) Anmeldenummer: **85106544.1**

(22) Anmeldetag: **29.05.85**

(51) Int. Cl.⁴: **B 29 C 41/26,** B 29 C 33/68
// B29L23:00

(30) Priorität: **08.06.84 DE 3421364**

(71) Anmelder: **BAYER AG, Konzernverwaltung RP
Patentabteilung, D-5090 Leverkusen 1 Bayerwerk (DE)**

(43) Veröffentlichungstag der Anmeldung: **02.01.86
Patentblatt 86/1**

(84) Benannte Vertragsstaaten: **AT BE CH DE FR GB IT LI SE**

(72) Erfinder: **Schreiner, Wilhelm, Dönhoffstrasse 45,
D-5090 Leverkusen 1 (DE)**
Erfinder: **Grimm, Wolfgang, Ing.-grad., In Holzhausen 81,
D-5090 Leverkusen 3 (DE)**

(54) Verfahren und Vorrichtung zum kontinuierlichen Herstellen von länglichen Hohlkörpern, insbesondere von Schläuchen, Rohren oder Innenlinern für solche, aus einem flüssigen Material, wie Reaktionsgemisch oder Schmelze.

㊗ Um bei der Herstellung von länglichen Hohlkörpern (15), insbesondere von Schläuchen, Rohren oder Innenlinern für solche, aus einem flüssigen Material, wie Reaktionsgemisch oder Schmelze, den durch die spiralförmige Wicklung von Trennfolien (4) verursachten Grat und den damit verbundenen höheren Rohrwiderstand und Verschleiß zu vermeiden, verwendet man ein Verfahren und eine Vorrichtung, womit man die Trennfolie (4) in Achsrichtung des Dornes (1) auf diesen auflegen kann.

BAYER AKTIENGESELLSCHAFT          5090 Leverkusen, Bayerwerk

Konzernverwaltung RP              Mr/by-c
Patentabteilung

Verfahren und Vorrichtung zum kontinuierlichen Herstellen von länglichen Hohlkörpern, insbesondere von Schläuchen, Rohren oder Innenlinern für solche, aus einem flüssigen Material, wie Reaktionsgemisch oder Schmelze

Die Erfindung richtet sich auf ein Verfahren und eine Vorrichtung zum Herstellen von länglichen Hohlkörpern, insbesondere Schläuchen, Rohren oder Innenlinern für solche, aus einem flüssigen Material, wie Reaktionsgemisch oder Schmelze, wobei die Umfangsfläche einer um eine waagerechte oder leicht geneigte Achse rotierenden Unterlage mit einer Trennfolie belegt wird und das Material auf diese Trennfolie aufgegeben wird und der entstehende Hohlkörper unter Berücksichtigung der Verfestigungsgeschwindigkeit des Materials kontinuierlich von der Unterlage in Achsrichtung abgezogen wird.

Bei der Herstellung solcher Hohlkörper verwendet man eine Trennfolie, welche auf einen Dorn in dessen Umfangsrichtung aufgewickelt wird, wobei man anschließend auf diese Lage das flüssige Material aufgibt. Nach dem

Le A 23 128

Abziehen des Hohlkörpers vom Dorn wird dann die Trennfolie entfernt. Nachteilig hierbei ist, daß sich der
Stoß der spiralförmig gewickelten Trennfolie an der
Innenwandung des erzeugten Hohlkörpers als vorstehender Grat abbildet. Je nach Wickelwinkel der Trennfolie
und der Höhe des entstandenen Grates entsteht an der
Rohrinnenwandung für die Strömung ein mehr oder weniger
großer Widerstand mit Drallwirkung auf die Strömung.
Der Grat schleißt sich zwar mit der Zeit ab. Hinter ihm
sind aber dann bereits Aushöhlungen durch Kavitation
entstanden, welche wiederum Strömungswiderstand verursachen, wodurch das Rohr vorzeitig verschleißt.

Die Aufgabe der Erfindung ist es, den inneren Rohrwiderstand und den Verschleiß durch ein geeignetes Verfahren
und eine geeignete Vorrichtung zur Herstellung solcher
Hohlkörper herabzusetzen.

Diese Aufgabe wird dadurch gelöst, daß die Trennfolie
in Achsrichtung auf die rotierende Unterlage aufgelegt
wird.

Dadurch wird erreicht, daß sich auf der Innenwandung
des Hohlkörpers der durch den Stoß der Trennfolie entstehende Grat nur in Längsrichtung des Hohlkörpers abbilden kann. Dadurch wird der Rohrwiderstand auf das
normale Maß herabgesetzt und es können sich auch keine
Kavitationserscheinungen zeigen. Das heißt, auch im
Bereich des Grates ist der Verschleiß der Innenwandung
des Hohlkörpers auf das normale Maß dezimiert.

Le A 23 128

Insbesondere, wenn man Hohlkörper größeren Durchmessers herstellen will, verwendet man vorzugsweise eine Trennfolie aus mehreren, überlappenden oder sich stoßenden Bahnen. Dies hat den Vorteil, daß sich die einzelnen Bahnen leichter an die Umfangsfläche der Unterlage anlegen lassen.

Die Trennfolie besteht in an sich bekannter Weise aus einem Silikonpapier, Polytetrafluorethylenfolie, Polyethylenfolie oder dergleichen.

Die neue Vorrichtung zum kontinuierlichen Herstellen von länglichen Hohlkörpern, insbesondere von Schläuchen, Rohren oder Innenlinern für solche, aus einem flüssigen Material, wie Reaktionsgemisch oder Schmelze, geht aus von einem rotierenden Dorn, welchem mindestens eine Materialzuführung und mindestens ein Rollenbock für eine Vorratsrolle einer Trennfolie zugeordnet sind.

Das Neue ist darin zu sehen, daß der Rollenbock mit dem Dorn umlaufend angeordnet ist und die Achse der Vorratsrolle quer zur Achse des Dornes ausgerichtet ist.

Auf diese Weise lassen sich Trennfolien parallel zur Achse des Dornes auf diesen auflegen und, falls die Trennfolien nicht eine einen Rolleffekt bewirkende Querspannung aufweisen, der sie zum Anliegen an den Dorn bringt, sind sich der Kontur des Dornes annähernde Führungselemente für die Trennfolie vorgesehen.

Le A 23 128

0166245

Vorzugsweise sind den Führungselementen Gleitstücke mit zelligem Polyurethanbelag zugeordnet.

Solche Beläge sind besonders verschleißfest, haben gute Gleiteigenschaften und schmiegen die Trennfolie besonders gut an den Dorn an.

Nach einer alternativen Ausführungsform der neuen Vorrichtung besteht die Trennfolie aus mehreren endlosen Bändern, welche auf der Außenfläche des Dornes in Arbeitsrichtung geführt sind und über Umlenkelemente durch den Hohlraum des Dornes zurückgeführt sind, wofür Öffnungen vorgesehen sind.

Während bei der ersten Ausführungsform der Vorrichtung die Trennfolie nach dem Ablängen des Hohlkörpers daraus entfernt werden muß, hat diese Ausführungsform den Vorteil, daß die endlosen Bänder während des Umlaufes sich wieder selbst aus dem entstehenden Hohlkörper entfernen. Außerdem wird auf diese Weise verlustfrei gearbeitet, indem diese aus Bändern bestehende Trennfolie immer wieder verwendbar ist und nur dem normalen Verschleiß unterliegt.

Die endlosen Bänder besitzen geringe Haftfähigkeit und bestehen beispielsweise aus Silikon, Tetrafluorethylen oder aus einem gegebenenfalls verstärkten Trägerband, welches mit einem dieser Materialien beschichtet ist.

An sich ist es möglich, daß die endlosen Bänder allein durch die Abzugskraft, mit der der Hohlkörper vom Dorn

Le A 23 128

abgezogen wird, angetrieben werden.

Vorzugsweise sind jedoch den endlosen Bändern Antriebe
zugeordnet, damit deren Vorschub in jedem Falle sichergestellt ist.

Vorzugsweise besteht der Antrieb aus einem Planetenradgetriebe.

Es versteht sich, daß sowohl das neue Verfahren als auch
die neue Vorrichtung so ausgebildet sein können, daß in
bekannter Weise Verstärkungseinlagen in den Hohlkörper
bei dessen Fertigung eingebracht werden können, daß
mehrere Materialzuführungen nacheinander vorgesehen sind
und der Hohlkörper in einer letzten Verfahrensphase mit
einem Außenliner umgeben werden kann. Dabei läßt sich
das Gesamtverfahren vorzugsweise in unmittelbar aufeinanderfolgenden Schritten auf der gleichen Vorrichtung
durchführen.

Als Material der länglichen Hohlkörper eignen sich
Thermoplaste, insbesondere thermoplastische Polyurethanelastomere. Davon sind wiederum solche vorzuziehen, welche
eine Verfestigungszeit von 0,5 bis etwa 180 Sekunden aufweisen. Es eignen sich aber auch reaktive Ausgangskomponenten welche Polyurethan, Polyesterharz oder Epoxidharz bilden.

In der Zeichnung ist die neue Vorrichtung in zwei Ausführungsbeispielen rein schematisch dargestellt und nachstehend näher erläutert. Es zeigen:

Le A 23 128

Fig. 1    eine erste Ausführungsform der Vorrichtung mit von Rollenböcken abgezogenen Trennfolien, und

Fig. 2    eine zweite Ausführungsform der Vorrichtung mit endlosen Bändern als Trennfolien.

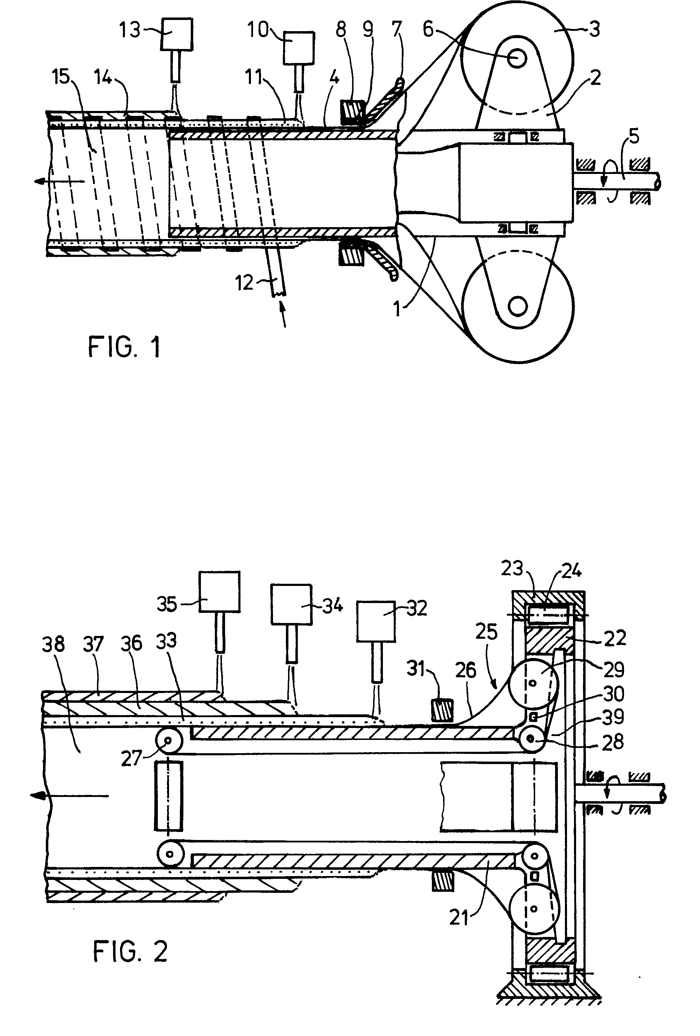

In Figur 1 besteht die Vorrichtung aus einem einendig gelagerten rotationsangetriebenen Dorn 1. Ihm sind vier Rollenböcke 2 zugeordnet, von denen von Vorratsrollen 3 einander überlappende Bahnen einer Trennfolie 4 ablaufen. Die Rollenböcke 2 sind zusammen mit dem Dorn 1 an der angetriebenen Achse 5 fixiert. Ihre Achsen 6 sind quer zur Achse 5 des Dornes 1 ausgerichtet. Der Trennfolie 4 sind sich der Kontur des Dornes 1 nähernde Führungselemente 7 zugeordnet. Sie sind mit Gleitstücken 8 mit einem zelligen Polyurethanelastomerbelag 9 ausgestattet. Dahinter befindet sich eine erste Materialzuführung 10. Mit ihr wird ein flüssiges Polyurethanelastomer aufgegeben, welches auf der Trennfolie 4 einen Innenliner 11 bildet. An einer weiteren Station wird eine Gewebebahn 12 zur Verstärkung aufgewickelt. Mit einer weiteren Materialzuführung 13 wird eine zweite Schicht 14 aus thermoplastischem Polyurethanelastomer aufgebracht. Der Dorn 1 rotiert relativ langsam und der gebildete Hohlkörper 15 wird unter Berücksichtigung der Verfestigungsgeschwindigkeit mit üblichen Mitteln abgezogen.

In Figur 2 besteht die Vorrichtung ebenfalls aus einem einendig gelagerten rotationsangetriebenen Dorn 21. Er ist mit einem Speichenrad 22 versehen, welches in einem Statorkranz 23 auf Rollen 24 gelagert ist. Dem Dorn 21 sind als Trennfolie 25 endlose Bänder 26 zugeordnet.

Le A 23 128

Sie laufen über Führungselemente 27, 28 und über Rollen 29, welche von einem angedeuteten Planetenradgetriebe 30 angetrieben sind. Die endlosen Bänder 26 werden mittels Führungselementen 31 an die Kontur des Dornes 21 angelegt und stoßen gegeneinander. Die Bänder 26 bestehen aus Kunststoff mit Gewebeeinlagen und sind mit Silikon beschichtet. Mittels einer Materialzuführung 32 wird eine erste Schicht 33 flüssigen Materials aufgebracht; mittels der Materialzuführungen 34 und 35 wird eine zweite und eine dritte Schicht 36 bzw. 37 aufgebracht. Der ausgehärtete Hohlkörper ist mit 38 bezeichnet; die Öffnungen für den Durchtritt der Bänder 26 mit 39.

## Beispiel

Benutzt wird die Vorrichtung gemäß Fig. 1. Der Dorn 1 rotiert mit 36 U/min. Er besitzt einen Durchmesser von 10,5 cm und dementsprechend einen Umfang von 33 cm. Als Trennfolie 4 läßt man vier einander überlappende Bahnen aus Polyethylenpapier von 250 µm Stärke einlaufen. Mit der Materialzuführung 10 wird ein Gemisch aus 100 Gew.-Teilen Polyether-Diamin-Gemisch und 80 Gew.-Teilen eines 4,4-MDI-Polyether-Prepolymers in der Menge von 1,081 kg/min aufgegeben. Dadurch wird ein Innenliner 11 von 6 mm Stärke gebildet. Die Verfestigungszeit des aus einer Rundäuse mit 6 mm Öffnungsweite aufgebrachten Gemisches beträgt 17 sec. Daraus ergibt sich die erforderliche Minimallänge der Aushärtungsstrecke in Achsrichtung des Dornes 1 mit 14 cm. Die Abzugsgeschwindigkeit des fertigen Rohres 15 ergibt sich aufgrund vorstehender Daten mit 0,47 m/min. Hinter der Materialzuführung 10 wird eine Gewebebahn 12 aus Glasfasern zur Verstärkung aufgewickelt. Ihre Breite entspricht der Breite des mit der Materialzuführung 10 aufgebrachten Gemischfilmes, ist jedoch dazu um die halbe Breite versetzt. Mittels der zweiten Materialzuführung 13 wird ein weiteres Gemisch folgender Konsistenz in einer Menge von 0,786 kg/min aufgebracht und bildet nach der Verbestigungszeit von 15 sec. eine Schicht 14 von 4 mm Stärke: 100 Gew.-Teile Polyether-Diamin-Gemisch und 104 Gew.-Teile eines 4,4-MDI-Polyether-Prepolymers.

Le A 23 128

Patentansprüche

1. Verfahren zum kontinuierlichen Herstellen von länglichen Hohlkörpern, (15, 38), insbesondere von Schläuchen, Rohren oder Innenlinern für solche, aus einem flüssigen Material, wie Reaktionsgemisch oder Schmelze, wobei die Umfangsfläche einer um eine waagerechte oder leicht geneigte Achse (5) rotierende Unterlage (1, 21) mit einer Trennfolie (4, 25) bedeckt wird und das Material auf diese Trennfolie (4, 25) aufgegeben wird und der entstehende Hohlkörper (15, 38) unter Berücksichtigung der Verfestigungsgeschwindigkeit des Materials kontinuierlich von der Unterlage (1, 21) in Achsrichtung abgezogen wird, dadurch gekennzeichnet, daß die Trennfolie (4, 25) in Achsrichtung auf die rotierende Unterlage (1, 21) aufgelegt wird.

2. Verfahren nach Anspruch 1, dadurch gekennzeichnet, daß die Trennfolie (4) aus mehreren überlappenden Bahnen besteht.

3. Vorrichtung zum kontinuierlichen Herstellen von länglichen Hohlkörpern (15, 38), insbesondere von Schläuchen, Rohren oder Innenlinern für solche, aus einem flüssigen Material, wie Reaktionsgemisch oder Schmelze, bestehend aus einem rotierenden Dorn (1), welchem eine Materialzuführung (10, 13) und mindestens ein Rollenbock (2) für eine Vor-

Le A 23 128

0166245

ratsrolle (3) einer Trennfolie (4) zugeordnet sind, dadurch gekennzeichnet, daß der Rollenbock (2) mit dem Dorn (1) umlaufend angeordnet ist und die Achse (6) der Vorratsrolle (3) quer zur Achse (5) des Dornes (1) ausgerichtet ist.

4. Vorrichtung zum kontinuierlichen Herstellen von länglichen Hohlkörpern (38), insbesondere von Schläuchen, Rohren oder Innenlinern für solche, aus einem flüssigen Material, wie Reaktionsgemisch oder Schmelze, bestehend aus einem rotierenden Dorn (21) und einer Trennfolie (25), dadurch gekennzeichnet, daß die Trennfolie (25) aus mehreren endlosen Bändern (26) besteht, welche auf der Außenfläche des Dornes (21) in Arbeitsrichtung geführt und über Führungselemente (27, 28) durch den Hohlraum des Dornes (21) zurückgeführt sind, wofür Öffnungen (39) vorgesehen sind.

5. Vorrichtung nach Anspruch 4, dadurch gekennzeichnet, daß den endlosen Bändern (26) ein Antrieb (30) zugeordnet ist.

6. Vorrichtung nach Anspruch 5, dadurch gekennzeichnet, daß der Antrieb (30) aus einem Planetenradgetriebe besteht.

7. Vorrichtung nach einem der Ansprüche 3 bis 6, dadurch gekennzeichnet, daß für die Trennfolie (4, 25) sich der Kontur des Dornes (1, 21) nähernde Führungselemente (7, 31) vorgesehen sind.

Le A 23 128

0166245

8. Vorrichtung nach Anspruch 7, dadurch gekennzeichnet,
   daß den Führungselementen (7, 31) Gleitstücke (8)
   mit zelligem Elastomerbelag (9) zugeordnet sind.

Le A 23 128

FIG. 1

FIG. 2